# EUROPEAN PATENT APPLICATION

(11) **EP 3 939 764 A1**
(43) Date of publication of application: **19.01.2022**
(21) Application number: 21382607.6
(22) Date of filing: 06.07.2021
(51) Int. Cl.: B29C 45/37, B29C 45/76

(54) **TRACEABILITY SYSTEM FOR INJECTED PARTS**

(30) Priority: 15.07.2020 ES 202030728
(71) Applicant: Comercial de Utiles y Moldes, S.A., 08960 Sant Just Desvern, Barcelona (ES)
(72) Inventor: NAVARRA PRUNA, Alberto, 08960 SANT JUST DESVERN (BARCELONA) (ES)
(74) Representative: Herrero & Asociados, S.L.

(57) **Abstract**

The traceability system for injected parts comprises a traceability calendar (1) that indicates a date and time visibly placed on an injecting machine; a data control module (2) connected to the traceability calendar (1); and one or more date stamps (3) that mark the day and/or the month and/or the year on an injected piece.

It allows providing a traceability system for injected parts that is sufficiently reliable and that facilitates or makes the task of changing the date of the date stamp as accurate as possible.

## Description

The present invention relates to a traceability system for injected parts.

### Background of the invention

In the manufacture of plastic parts manufactured by the injection process, it is common to include date stamps in the mold that allow knowing the date that the part has been manufactured through the injected part itself. With this, it is intended to know the traceability of the production process, and to know at all times the materials and processes used for its manufacture.

The idea itself is a good one, but the systems in use today are not reliable, as the entire process requires the shift operator to make changes to the manufacturing date at the appropriate time.

However, this is practically impossible, since the operating systems do not provide enough data so that, inevitably, at 12 o'clock at night each day, changes are made, of one or all of the molds that are in production.

A person is not a watch nor does he/she have the ability to make all the changes that the different molds in production may require at 12 o'clock at night.

All this, however, does not mean that at present this impossibility is known, and that this reality is not faced with specific decisions to find a solution. In addition, time and money continue to be invested in installing date molds even though they are known to be unreliable.

Thousands of molds are manufactured annually in the world and most of them incorporate one or more date stamps, the exorbitant investment that this represents is eloquent so as to decide to make decisions in this regard.

### Description of the invention

Therefore, an objective of the present invention is to provide a traceability system for injected parts that is sufficiently reliable and that facilitates or makes automatic the task of changing the date of the date stamp as accurately as possible.

With the traceability system of the invention, the aforementioned drawbacks are solved, presenting other advantages that will be described below.

The traceability system for injected parts is defined in claim 1, and additional features are described in the dependent claims.

The system consists of having a constantly displayed calendar with the date of the day, month and year, a light signal, like a traffic light, will indicate when the mold is in controlled operation, green color, if the mold should change the date, a flashing red signal, or if the mold is stopped, a red signal.

These are the only three possibilities available to the machine to control production.

We must not forget that traceability has a price, since each day has a maximum time of 1440 minutes to manufacture parts, not a second more, time is not elastic.

The most effective system to guarantee control is to stop the machine at the end of minute 1440, but this is the most inadvisable in a production process. However, if a priori we consider that the price to pay can be managed intelligently, we find that, with a minimum cost in exchange for greater quality control, the solution in the process is very feasible.

It is a matter of considering a minimum daily production time of 1430 minutes plus a handling margin of 10 minutes. This allows us to control daily production with a cost increase of 0.0096% and a traceability guarantee greater than 99%.

Therefore, applying this logic to the controlled traceability system, manufacturing standards are established that allow us to guarantee 99% traceability control for all injected plastic products with manually changed date stamp.

With the application of the traceability calendar in the injection machine and a date stamp model that allows change without stopping production, it can be guaranteed with complete certainty that the traceability control is fully assured, drastically increasing the quality of the products with a minimal additional cost.

The system consists of coupling to each injection machine, a traceability calendar, which will give visibility to the current date, hour, day, month and year. In addition, new injection machines can include this traceability calendar as a standard.

For a mold, it is essential to know exactly the day, the month and the current year, since these are in most cases, the only mandatory data that shall be recorded on the pieces with controlled traceability.

This starting point is absolutely essential to guarantee traceability, since, without this information, it is completely impossible to guarantee exactly the dates recorded on the injected parts.

Therefore, the essential point is the traceability calendar on which the entire system that we will describe below is based.

It involves adapting each of the injection machines of a connection system via the Internet, which includes a mini-computer with WiFi, Bluetooth^{®} and GNSS connection, and which, through a touch screen, for example, has predefined information for everything which represents traceability, in addition to other types of information that the mold may require.

The system includes two different traceability programs in its composition, but with the same objective, to command the operating system for the manual system, and to do the same with automatic operation dates.

When connecting the traceability calendar to the machine, the system's WiFi must be connected to the company's own Internet connection.

A GNSS signal receiver connects with the geographical position and marks the corresponding time zone. The local time and the calendar appear on the screen, even with the descriptive standard of each time zone, that is, DD.MM.YY., MM.DD.YY. or YY.MM.DD.

From this moment on, the machine is connected to the Internet.

The time and date appear, for example, in white digits on a black background on the screen, which must be placed in a visible place.

All molds with controlled traceability date stamps preferably incorporate a chip with a password that is the key to access all your information. This chip can be called a data control module.

When we connect the traceability calendar with the mold data control module, we have the mold connected to the Internet.

At the moment we make the connection, the date of the traceability calendar, and a light on the data control module turn red, signaling that the mold and the injection machine are connected.

Next, the mold dates are positioned with the same calendar data, and once it is verified that they coincide, we will press the system compliance button. The numbers and light turn green and the mold is ready for controlled production. The system has the option of sending a statement to the customer's logistics department that the mold goes into production.

In other words, the injection machine is in all cases the connection nexus of the mold to the Internet of the company, since it is much cheaper than creating the Wi-Fi connection for each of the molds. In this way, the machines that are continuously installed have the Internet connection system independently, and all the molds that are connected through the password are automatically connected at the time of making the connection between the traceability calendar and the mold data control module, and from this moment we control all the information that the mold needs.

Changing the date stamp data can be done in two different ways, manually or automatically.

In manual mode, at 12 o'clock at night, the official time to make changes to the date stamps, the information on the screen and in the mold data control module change to flashing red, thereby indicating that information changes must be made.

From this moment on, the date stamps must be changed with the information that appears on the screen. We have a pre-established time to position the new date on the molds, for example, 10 minutes.

To do this, it is preferably done through a remote control date stamp, which does not need to open the mold, or stop manufacturing for it. Simply, once the part has been ejected and before making the new injection, it is the optimal moment to change the information and press a compliance button.

The traceability calendar and the data control module light automatically stop flashing, turning green, indicating that the system is ready for production. The customer can receive daily, via the Internet, all the information in this regard.

The system preferably has a reliability assurance, that, if the change has not been made within the programmed time, a stop signal can paralyze production.

The system can choose not to stop production, but in this case after the programmed time has passed, the system sends a message to the customer of the product, informing that the mold is being operated without traceability control.

Every day they have 1440 minutes, which is equivalent to the maximum time that the mold can manufacture completely controlled parts, which is equivalent to the optimal quality capacity of the mold itself to produce parts. These data are used to estimate the prices of the product, based on the quantity and quality agreed between the customer and the supplier, whose production must not be exceeded in order to control the quality of the final product.

The system also makes it possible to avoid uncontrolled parts being made with the customer's mold, since at the moment the mold is connected to the machine, the customer automatically receives the information that his mold goes into production with a maximum manufacturing capacity.

If the mold is not connected, it cannot manufacture, since the customer cannot in any case receive manufactured parts if the mold is not operational.

The agreement between the customer and the supplier may include a total liability insurance for illegal manufacturing, leading to a rigorous control of the commitment between both parties.

The mold indicates that it is under controlled traceability through a green light in the mold data control module as the green color of the machine's traceability calendar.

In all cases, both with manual date stamps or automatic date stamps, when starting production, it is advisable to check that all date stamps indicate the date on the screen. After a period of time in storage, it is essential to manually rotate the date stamps in order to "loosen" the rest period.

In the automatic date stamp mode, a computer program contains a different algorithm than the manual one, since the time of the change must be automatically made in such a way that it recognizes the sequence in a perpetual calendar, while the daily calendar for manual use should only show the current date, and it is the base of reference to make the changes at the moment that the flashing red light indicates it.

It is for this reason that the perpetual calendar has to include the periodic routine that is repeated annually 7 times, which are equivalent to the months: January, March, May, July, August, October and December, but not in February, April, June, September and November.

For these cases it is necessary to make an alteration in the electronic program so that in the month of February of the conventional year at 12 o'clock at night on the 28th, the date stamp receives the signal to skip the days 29, 30 and 31, in order that, in the marking of the date stamp, the number 1 is indicated as the first day of March.

In leap years, the program will be altered at 12 o'clock at night on the 29th, and the date stamp will receive the signal to skip the 30th and 31st days so that in the marking of the date stamp the indicator arrow points to 1 as first day of March.

In the months of April, June, September and November, it will be on the 30th at 12 o'clock at night, when the date stamp will receive the signal to skip the 31st, so that, in the marking of the date stamp, the indicator arrow points to the day 1 of the following month.

The same program for the days will also serve as the basis for the months, the date of which always has 12 consecutive numbers. In this case, the incident will only be to take advantage of the day signal, since, in this case, the date stamp that contains only the 12 numbers of the months does not have to skip any number to indicate the change of month.

In the case of years, it will only be taken as a reference December 31 at 12 at night, since the years are always correlative to the numbers recorded on the date stamp.

The perpetual calendar includes the algorithm that is generated every four years with the leap year, and includes, in a continuous sequence, the recordings of the date stamps that include the maximum 31 days of each month, the 12 months of the year and the 8 years that the annual date stamp includes by default.

The automatic system is guaranteed with the accuracy and effectiveness of the universal clock used for it.

With the description of the system, it is clearly reflected that the basis of its operation is the non-extendable 1440 minutes per day, 12 at night as the axis of the system and the constantly displayed calendar.

When the automatic system is used, traceability is guaranteed 100% efficiency, not requiring the intervention of the human factor and without guidelines for the position of date stamps.

The universal calendar system automatically selects the local time and provides information to the customer of the location where their mold is being operated, via GNSS.

In an injection plant with several machines connected to the system, it is easy to recognize which machines operate without date stamps, white date display, molds that are operated with date stamps in perfect condition, green date, molds that require changing of information, date in flashing red, and date stamps that are operating out of control, date in red.

A very important factor is that in the large multinationals that are constantly moving the most important molds from one manufacturing plant to another, in different states, and even between different countries, at all times the system will allow the logistics departments to control the molds where they are being operated and to constantly self-control production levels. Throughout the life of the product, the place where the part was manufactured, as well as the entire history of its process can be always known.

The holder of this application has two different types of date stamps that can be attached to the traceability calendar, a so-called contrast model, with different types of information, all based on the Gregorian calendar, and also has the so-called linear model that allows the use of the Gregorian calendar for MM.YY or YY.MM, and the Julian calendar that has the DD.YY, or YY.DD, depending on the type of reading format of the country where the pieces are injected.

The linear model shall carry out the change of the inserts, with the mold open, so the change times are a little longer; however, the reading sharpness of its information is the clearest on the market.

In each of these cases, the system screen can be adapted to reflect the type of information and format of each model.

By virtue of the system connected to the Internet in all the machines, at any time from anywhere we can know the molds that are operating with controlled traceability date stamps.

### Brief description of the drawings

For a better understanding of what has been stated, some drawings are attached in which, schematically and only as a non-limiting example, a practical case of embodiment is represented.

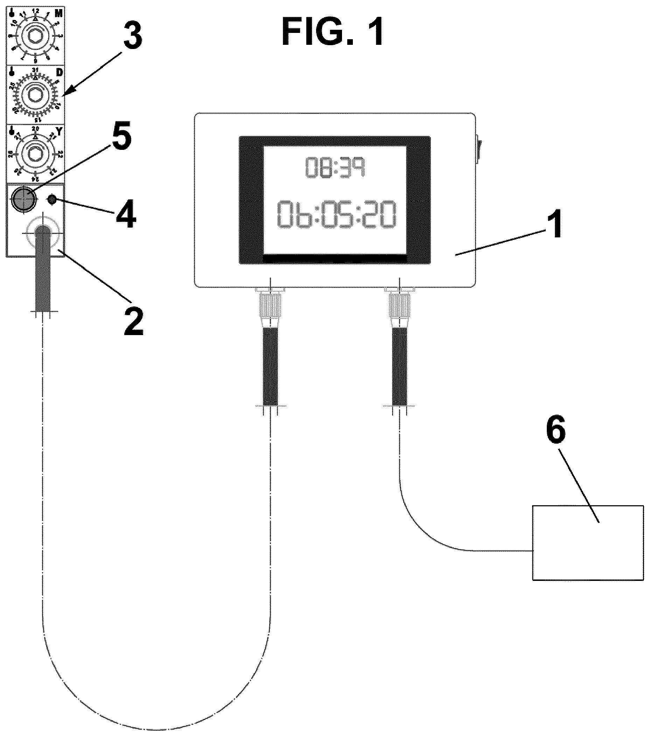

Figure 1 is a schematic view of the traceability system according to the present invention.

### Description of a preferred embodiment

As shown in figure 1, the traceability system according to the present invention comprises a traceability calendar 1.

This traceability calendar 1 is a device equipped with a screen showing a date and time.

The traceability system also comprises a data control module 2 provided with a chip and a microcomputer, which can be accessed by means of a password. This data control module 2 is connected to the traceability calendar 1 and comprises a light 4 and a button 5, the function of which will be described below.

The data control module 2 is connected to a network, such as the Internet, or via Bluetooth^{®}, and is also preferably connected to a satellite navigation system to determine its location.

The traceability system also comprises a date stamp 3, which can be of any suitable shape, but preferably it is a date stamp 3 that can be operated remotely or automatically. These types of date stamps are described in other patent applications of the same owner as the present application.

As shown in figure 1, the traceability calendar 1 is also connected to the injection machine, the electrical connection and the relevant data for production control, for example, open machine, machine in injection process, closed machine, etc., indicated generally schematically by a rectangle 6 in Figure 1.

Both the traceability calendar 1 and the light 4 of the data control module 2 can indicate three different situations.

If the date stamp 3 is not synchronized with the traceability calendar 1, the background of the traceability calendar screen or its numbers will be in a first color, preferably red, like the light 4.

If date stamp 3 is synchronized with traceability calendar 1, the background of the traceability calendar 1 screen or its numbers will be in a second color, preferably green, like the light 4.

If the date stamp 3 must be synchronized with the traceability calendar 1 because the date has changed, the background of the traceability calendar 1 screen or its numbers will flash, for example, in red, like the light 4, indicating to the user that it needs to be synchronized.

For confirmation of synchronization, on the data control module 2 the user presses the confirmation button 5.

It should be noted, as described above, that the date stamp may be automatic, so that manual synchronization is not required.

Despite the fact that reference has been made to a specific embodiment of the invention, it is clear to a person skilled in the art that the described traceability system is susceptible to numerous variations and modifications, and that all the mentioned details can be technically substituted by other being technically equivalent, without departing from the scope of protection defined by the appended claims.

## Claims

1. Traceability system for injected parts, **characterized in that** it comprises:
- a traceability calendar (1) indicating a date and time visibly placed on an injection machine;
- a data control module (2) connected to the traceability calendar (1); and
- one or more date stamps (3) that mark the day and/or the month and/or the year on an injected piece.

2. Traceability system for injected parts, according to claim 1, wherein it is indicated both in the traceability calendar (1) through a screen and in the data control module (2) through a light (4), with color signals and flashes if:
- the date stamps (3) have updated information;
- the date stamps (3) do not have updated information;
- the date stamps (3) are in an update period;
- if there are no date stamps (3) in the mold, so the information should not be updated.

3. Traceability system for injected parts according to claim 1, wherein the data control module (2) comprises a button to confirm the update (5) of the date stamp information (3) with the traceability calendar (1).

4. Traceability system for injected parts according to claim 1, wherein the traceability calendar (1) has connectivity (Bluetooth^{®}, WiFi, GNSS, etc.), to know its location.

5. Traceability system for injected parts according to claim 1, wherein the data control module (2) comprises an internal memory that stores information about the mold when it is not in production, and when it is back in production, the stored information is searchable.

6. Traceability system for injected parts according to claim 1, wherein the traceability calendar (1) is connected to remotely report changes in the date stamps (3) or whether the mold is in production or not.

7. Traceability system for injected parts according to claim 1, wherein the traceability calendar (1) is programmable to control both the Gregorian calendar and the Julian calendar.

8. Traceability system for injected parts according to claim 1, wherein the traceability calendar (1) is connected to the injecting machine (6) to obtain current.
